# EUROPÄISCHE PATENTSCHRIFT

(11) **EP 3 695 108 B1**
(45) Veröffentlichungstag und Bekanntmachung des Hinweises auf die Patenterteilung: **11.12.2024**
(21) Anmeldenummer: 18783485.8
(22) Anmeldetag: 10.10.2018
(51) Int. Cl.: F02M 37/10, F02M 37/08, H02K 5/08, F04C 2/16, F02M 37/04, F04C 2/08, F04C 11/00, F04C 13/00, H02K 5/02, H02K 11/40, H02K 5/12

(54) **KRAFTSTOFFPUMPE UND KRAFTSTOFFFÖRDEREINHEIT**
FUEL PUMP AND FUEL SUPPLY UNIT
POMPE À CARBURANT ET UNITÉ D'ALIMENTATION DE CARBURANT

(30) Priorität: 12.10.2017 DE 102017218287
(43) Veröffentlichungstag der Anmeldung: 19.08.2020
(73) Patentinhaber: Vitesco Technologies GmbH, 93055 Regensburg (DE)
(72) Erfinder: BECKER, Dirk, 36211 Alheim (DE); BÄMPFER, Michael, 36199 Rotenburg (DE); MISSUN, Jens, 34225 Baunatal (DE); VÖLKER, Marc, 65824 Schwalbach (DE)
(74) Vertreter: Vitesco Technologies
(86) Internationale Anmeldenummer: PCT/EP2018/077560
(87) Internationale Veröffentlichungsnummer: WO 2019/072892

(56) Entgegenhaltungen:
- EP-A1- 0 754 483
- WO-A1-00/60231
- DE-A1- 102008 004 845
- DE-A1- 4 201 401
- JP-A- 2011 117 434

## Beschreibung

Die Erfindung betrifft eine Kraftstoffpumpe und eine Kraftstofffördereinheit mit einer solchen Kraftstoffpumpe zur Verwendung in einem Kraftstofftank eines Fahrzeugs zur Förderung von Kraftstoff zu einem Verbrennungsmotor. Unter einem Fahrzeug ist dabei jede Art von Fahrzeug zu verstehen, welches zum Betrieb mit einem flüssigen und/oder gasförmigen Kraftstoff versorgt werden muss, insbesondere aber Personenkraftwagen und/oder Nutzfahrzeuge.

Solch eine Kraftstoffpumpe und Kraftstofffördereinheit sind aus dem Stand der Technik vielfach bekannt. Die Kraftstoffpumpe umfasst neben einer Pumpenstufe auch einen die Pumpenstufe antreibenden Elektromotor. Der Elektromotor und die Pumpenstufe sind dabei mit einem Blechmantel bzw. Blechzylinder verrollt, welcher im Wesentlichen sowohl den Elektromotor als auch die Pumpenstufe einkapselt und dabei dichtend umschließt.

In der Fahrzeugtechnik werden zur Ableitung von infolge einer Förderung von Kraftstoff entstehenden statischen Aufladungen an ein Massepotential elektrisch leitfähige bzw. antistatische Kraftstoffleitungen aus Kunststoff schon länger in Serie eingesetzt. Diese verhindern eine statische Aufladung bei hohen Durchflussgeschwindigkeiten, die im schlimmsten Fall zu Funkenflug und einer Selbstentzündung eines Fahrzeugs führen kann. Um elektrisch leitfähig zu sein, sind diese Kunststoffleitungen entweder gänzlich aus einem elektrisch leitfähigen Kunststoff ausgebildet oder mit zumindest einer elektrisch leitfähigen Schicht versehen, so dass die statische Aufladung an das Massepotential abgeleitet werden kann.

Die Druckschrift DE 10 2008 004845 A1 offenbart eine Fluidpumpe mit einem Elektromotorgehäuse, das aus einem Blech hergestellt ist, und einem Pumpengehäuse zur Aufnahme einer Pumpenstufe, wobei das Pumpengehäuse aus einem Kunststoff hergestellt ist.

Die Druckschrift WO 00/60231 A1 offenbart eine Kraftstoffpumpe mit einem Elektromotorgehäuse, das aus einem Blech hergestellt ist, und einem Pumpengehäuse zur Aufnahme einer Pumpenstufe, wobei das Pumpengehäuse aus einem elektrisch leitfähigen Kunststoff hergestellt ist.

Die Druckschrift EP 0 754 483 A1 offenbart eine Kraftstofffilteraufnahme mit einem Kraftstofffilter und einer in der Kraftstofffilteraufnahme angeordneten Kraftstoffpumpe, die von einem Elektromotor antreibbar ist. Der Elektromotor weist ein Metallgehäuse auf, das zusammen mit einem unteren Teil der Kraftstofffilteraufnahme, welches aus einem leitenden Kunststoff ausgebildet ist, so zusammenwirkt, dass eine elektrische Aufladung abgeleitet werden kann.

Eine der Erfindung zugrunde liegende Aufgabe ist es, eine solche Ableitung von statischen Aufladungen an ein Massepotential zu verbessern.

Diese Aufgabe wird durch den Anspruch 1 gelöst, der eine Kraftstoffpumpe unter Schutz stellt. Vorteilhafte Ausführungsformen der Erfindung sind Gegenstand der Unteransprüche.

Es wird eine Kraftstoffpumpe vorgeschlagen, umfassend einen Elektromotor, eine durch den Elektromotor antreibbare Pumpenstufe und ein den Elektromotor und die Pumpenstufe aufnehmendes Kraftstoffpumpengehäuse.

Dabei wird vorgeschlagen, dass das Kraftstoffpumpengehäuse ein erstes Gehäuseteil zur Aufnahme des Elektromotors und ein zweites Gehäuseteil zur Aufnahme der Pumpenstufe aufweist, wobei das erste Gehäuseteil aus einem leitfähigen Kunststoff zur Ableitung von statischen Aufladungen an ein Massepotential ausgebildet ist.

Eine derart kunststofftechnisch leitfähige Ausbildung des ersten Gehäuseteils unterstützt die eingangs beschriebene, nach dem Stand der Technik bekannte Verwendung von elektrisch leitfähigen bzw. antistatischen Kraftstoffleitungen aus Kunststoff.

Eine Ausführungsform der Erfindung ist dadurch gekennzeichnet, dass das zweite Gehäuseteil aus einem leitfähigen Kunststoff zur Ableitung von statischen Aufladungen an ein Massepotential ausgebildet ist.

Eine derart kunststofftechnisch leitfähige Ausbildung des ersten Gehäuseteils und des zweiten Gehäuseteils unterstützt die eingangs beschriebene, nach dem Stand der Technik bekannte Verwendung von elektrisch leitfähigen bzw. antistatischen Kraftstoffleitungen aus Kunststoff.

Nach einem weiteren Aspekt der vorliegenden Erfindung kann der zur kunststofftechnischen Herstellung des ersten Gehäuseteils und/oder des zweiten Gehäuseteils verwendete Kunststoff mit Graphitpulver versehen sein, der die Leitfähigkeit des Kunststoffes sicherstellt.

Nach einem weiteren Aspekt der vorliegenden Erfindung kann der zur kunststofftechnischen Herstellung des ersten Gehäuseteils und/oder des zweiten Gehäuseteils verwendete Kunststoff zusätzlich oder alternativ dazu mit Kohlefasern versehen sein, der die Leitfähigkeit des Kunststoffes sicherstellt.

Nach einem weiteren Aspekt der vorliegenden Erfindung kann der zur kunststofftechnischen Herstellung des ersten Gehäuseteils und/oder des zweiten Gehäuseteils verwendete Kunststoff zusätzlich oder alternativ dazu mit Metallfasern versehen sein, der die Leitfähigkeit des Kunststoffes sicherstellt.

Es wird ferner eine Kraftstofffördereinheit mit einer Kraftstoffpumpe der zuvor beschriebenen Art vorgeschlagen.

Im Weiteren wird die Erfindung unter Bezugnahme auf Figurendarstellungen im Einzelnen erläutert. Aus den Unteransprüchen und der nachfolgenden Beschreibung bevorzugter Ausführungen ergeben sich weitere vorteilhafte Weiterbildungen der Erfindung. Hierzu zeigen:

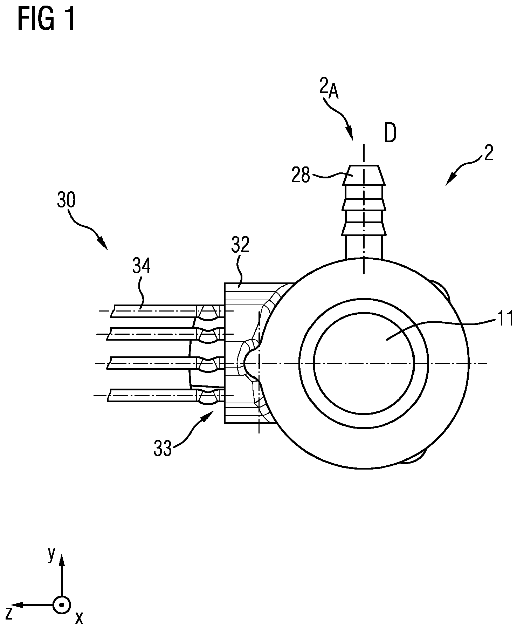

- Fig.1: eine Draufsicht einer vorgeschlagenen Kraftstoffpumpe,

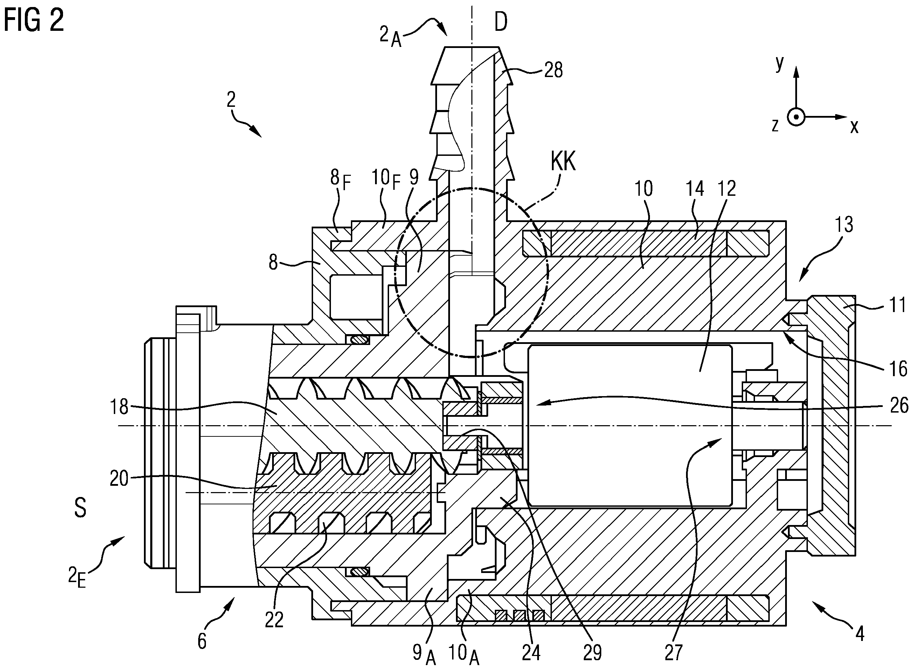

- Fig.2: eine erste Seitenansicht der in Fig.1 gezeigten Kraftstoffpumpe und

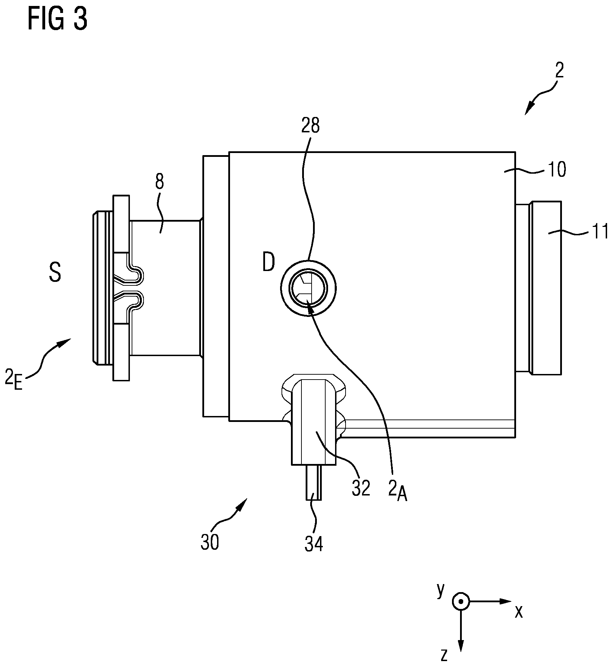

- Fig.3: eine zweite Seitenansicht der in Fig.1 gezeigten Kraftstoffpumpe

Es wird eine Kraftstoffpumpe 2 vorgeschlagen, umfassend einen Elektromotor 4, eine durch den Elektromotor 4 antreibbare Pumpenstufe 6, etwa in Gestalt einer Schraubenpumpenstufe, und ein den Elektromotor 4 und die Schraubenpumpenstufe 6 aufnehmendes Kraftstoffpumpengehäuse 8, 9, 10. Das Kraftstoffpumpengehäuse 8, 9, 10 umfasst dabei ein erstes Gehäuseteil 10 aus Kunststoff mit einer Aufnahme 16, in welcher der Elektromotor 4 angeordnet ist, und ein zweites Gehäuseteil 8 aus Kunststoff, welches die Schraubenpumpenstufe 6 aufnimmt. Die Schraubenpumpenstufe 6 umfasst dabei ein Pumpengehäuse 9, welches mit einem Pumpendeckel 8 gefügt ist. Der Pumpendeckel 8 bildet dabei das zuvor beschriebene zweite Gehäuseteil.

Der Pumpendeckel 8 ist über einen umfangsseitig in Axialrichtung X - X der Kraftstoffpumpe 2 vorspringenden Abschnitt 8_{F} mit einem zugeordneten in Axialrichtung X - X vorspringenden Abschnitt 10_{F} des Gehäuseteils 10 gefügt. An der Fügestelle ist der Pumpendeckel 8 zudem mit dem Gehäuseteil 10 stoffschlüssig verbunden. Die stoffschlüssige Verbindung kann dabei als Verklebung und/oder Verschweißung ausgebildet sein. Diese Verbindung wirkt dabei dichtend in Bezug auf einen geförderten Kraftstoff.

Am Pumpengehäuse 9 ist druckseitig D ein als Anschlag fungierender, abgesetzter Abschnitt 9_{A} ausgebildet, welcher mit einer planen Anschlagsfläche versehen ist und gegen einen zugeordneten planen Anschlagsabschnitt 10_{A} des Gehäuseteils 10 anschlägt. Der Pumpendeckel 8 wiederum schlägt mit seinem druckseitigen Ende, welches mit einer planen Anschlagsfläche versehen ist, plan an den Anschlagsabschnitt 9A an.

Zwischen dem Pumpengehäuse 9 und dem Pumpendeckel 8 ist eine Radialdichtung in Gestalt eine O-Rings angeordnet, welche einerseits dichtend in Bezug auf den geförderten Kraftstoff wirkt und andererseits den Pumpendeckel 8 gegenüber dem Pumpengehäuse 9 schwimmend zentriert.

Alternativ dazu ist auch eine Ausführung einer Schraubenpumpenstufe denkbar, die ohne einen solchen Pumpendeckel auskommt. Bei einer solch deckellosen Schraubenpumpenstufe bildet das Pumpengehäuse 9 den zweiten Gehäuseteil 8, welcher mit dem ersten Gehäuseteil 10 gefügt und stoffschlüssig verbunden ist.

Zwei gegenläufige im Pumpengehäuse 9 angeordnete Schraubenspindeln 18, 20 bilden dabei mit dem Pumpengehäuse 9 Förderkammern 22, welche sich infolge einer Drehung der Schraubenspindeln 18, 20 von einer Saugseite S zu einer Druckseite D der Pumpenstufe 6 bewegen. Oder anderes formuliert, es bewegen sich die Förderkammern 22 infolge einer Drehung der Schraubenspindeln 18, 20 in Richtung der Druckseite D.

Ein gegenüber dem ersten Gehäuseteil 10 zentrierend wirkender Pumpengehäuseabschnitt 24 ragt dabei zur Fügung des Pumpengehäuses 9 mit dem Gehäuseteil 10 in die Aufnahme 16 hinein und stellt dabei eine Lagerstelle 26 des Rotors 12 des Elektromotors 4 bereit, in welche sich das zugeordnete Wellenende des Rotors 12 hinein erstreckt. Dieses Wellenende greift dabei zur Verbindung mit der als Antriebsspindel fungierenden Schraubenspindel 18 über einen vorspringenden Abschnitt in eine Kupplung 29 ein, die als solche auf der Antriebsspindel 18 formschlüssig aufsitzt. Die andere Lagerstelle 27 hingegen, in welche sich das andere Wellenende des Rotors 12 hinein erstreckt, wird durch das Gehäuseteil 10 selbst bereitgestellt. Die Lagerstelle 27 ist dabei an einem deckelseitigen Ende des Gehäuseteils 10 an der Aufnahme 16 angeformt. D.h., dass die Lagerstelle 27 bei der kunststofftechnischen Herstellung des Gehäuseteils 10 mit ausgebildet wird.

Das Pumpengehäuse 9 ist gegenüber dem Gehäuseteil 10 in Umfangsrichtung ausgerichtet. Dazu ist ein druckseitig am Pumpengehäuse 9 in radialer Richtung angeformter - in den Figuren nicht dargestellter - Rippenabschnitt vorgesehen, welcher in eine korrespondierende Aussparung des Gehäuseteils 10 eingeführt ist.

Im Gehäuseteil 10 sind ferner über den Umfang verteilt Permanentmagnete 14 vergraben angeordnet, welche mit einem Wicklungen tragenden und Pole bildenden Blechpaket des Rotors 12 - welches auch als Ankerblechpaket bezeichnet wird - zusammenwirken.

Auch ist ein drittes als Deckel fungierendes Gehäuseteil 11 aus Kunststoff vorgesehen, welches an einer Fügestelle 13 mit dem Gehäuseteil 10 gefügt und stoffschlüssig verbunden ist. Auch diese Verbindung wirkt dabei dichtend in Bezug auf den geförderten Kraftstoff. Diese stoffschlüssige Verbindung kann dabei auch als Verklebung und/oder Verschweißung ausgebildet sein. Alternativ dazu kann ein solcher Deckel 11 auch entfallen. Für den Fall, dass der Deckel 11 entfiele, würde der entsprechend abschließende Abschnitt des Gehäuseteils 10 bei der kunststofftechnischen Herstellung des Gehäuseteils 10 mit ausgebildet werden.

Sowohl ein Anschlussstutzen 28 zur Verbindung mit einer Kraftstoffleitung als auch eine Anschlussbuchse 30 zur elektrischen Anbindung des Elektromotors 4 sind dabei quer - und in diesem Ausführungsbeispiel orthogonal - zu einer Längsrichtung X - X der Kraftstoffpumpe 2 vom Gehäuseteil 10 weggeführt. Die Anschlussbuchse 30 umfasst einen am Gehäuseteil 10 angeformten Abschnitt 32 mit Kontakten 33, die mit Leitungen 34 verbunden sind, wobei die Leitungen 34 quer bzw. orthogonal zur Längsrichtung X - X wegführen. Eine solche Orthogonalität ist dabei nur beispielhaft zu verstehen und nicht zwingend erforderlich, denn auch eine von einem rechten Winkel zur Längsrichtung X - X abweichende Wegführung des Anschlussstutzens 20 und der Anschlussbuchse 18 vom Gehäuseteil 10 in Querrichtung trägt dazu bei, an Bauraum in Längsrichtung X - X einzusparen.

Die Anordnung des Pumpengehäuses 9 zum Gehäuseteil 10 ist dabei derart, dass das Pumpengehäuse 9 mit dem Gehäuseteil 10 einen in den Anschlussstutzen 28, der als hydraulischer Abgang fungiert, mündenden Kraftstoffkanal KK bildet. Dieser Kraftstoffkanal KK steht dabei nicht nur mit dem Anschlussstutzen 28 in einer Strömungsverbindung bzw. fluidischen Kommunikationsverbindung, sondern auch mit der Aufnahme 16, in welcher der Rotor 12 angeordnet ist, um eine Umströmung des Rotors 12 zu Kühlungszwecken zu ermöglichen. D.h., dass der Kraftstoffkanal KK den geförderten Kraftstoff sowohl quer zur Längsrichtung X - X der Kraftstoffpumpe 2 in den Anschlussstutzen 28 als auch in der Längsrichtung X - X der Kraftstoffpumpe 2 in die Aufnahme 16 führt.

Zur Ableitung von infolge einer Förderung von Kraftstoff entstehenden statischen Aufladungen an ein Massepotential wird dabei vorgeschlagen, das Gehäuseteil 10 und/oder das Gehäuseteil 8, 9 aus einem leitfähigen Kunststoff auszubilden. Ein solch leitfähiger Kunststoff könnte z.B. mit Graphitpulver, Kohlefasern und/oder mit Metallfasern versehen sein, um eine Leitfähigkeit des Kunststoffes sicher zu stellen.

Eine derart kunststofftechnisch leitfähige Ausbildung des Gehäuseteils 10 und/oder des Gehäuseteils 8, 9 unterstützt die nach dem Stand der Technik bekannte Verwendung von elektrisch leitfähigen bzw. antistatischen Kraftstoffleitungen aus Kunststoff.

Eine Förderung eines Kraftstoffes durch die Kraftstoffpumpe 2, die als solche auch als Kraftstoffförderaggregat bezeichnet wird, stellt sich dabei wie folgt dar:
Die Kraftstoffpumpe 2 saugt den Kraftstoff über eine saugseitige Einlassöffnungen 2_{E} am Pumpendeckel 8 in die Förderkammern 22 ein, über welche der Kraftstoff dann bis zu zumindest einer druckseitigen Auslassöffnung des Pumpengehäuseabschnitts 24 gefördert wird, durch welche er dann sowohl in die Aufnahme 16 zur Umströmung des Rotors 12 als auch in den Strömungskanal KK und dann weiter bis zum Auslassstutzen 28 strömt, über dessen Auslassöffnung 2_{A} er schließlich aus der Kraftstoffpumpe bzw. dem Kraftstoffförderaggregat 2 austritt. Die besagte zumindest eine druckseitige Auslassöffnung des Pumpengehäuseabschnitts 24 steht demnach sowohl zum Kraftstoffkanal KK als auch zur Aufnahme 16 in Strömungsverbindung bzw. fluidischer Kommunikationsverbindung.

Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen ergibt.

## Patentansprüche

1. Kraftstoffpumpe umfassend
einen Elektromotor (4),
eine durch den Elektromotor (4) antreibbare Pumpenstufe (6) und ein den Elektromotor (4) und die Pumpenstufe (6) aufnehmendes Kraftstoffpumpengehäuse (8, 9, 10), wobei das Kraftstoffpumpengehäuse (8, 9, 10) ein erstes Gehäuseteil (10) zur Aufnahme des Elektromotors (4) und ein zweites Gehäuseteil (8, 9) zur Aufnahme der Pumpenstufe (6) aufweist, **dadurch gekennzeichnet, dass**
das erste Gehäuseteil (10) aus einem leitfähigen Kunststoff zur Ableitung von statischen Aufladungen an ein Massepotential ausgebildet ist.

2. Kraftstoffpumpe nach Anspruch 1, **dadurch gekennzeichnet, dass** das zweite Gehäuseteil (8, 9) aus einem leitfähigen Kunststoff zur Ableitung von statischen Aufladungen an ein Massepotential ausgebildet ist.

3. Kraftstoffpumpe nach Anspruch 1 oder 2, **dadurch gekennzeichnet, dass** der Kunststoff mit Graphitpulver versehen ist, der die Leitfähigkeit des Kunststoffes sicherstellt.

4. Kraftstoffpumpe nach einem der vorhergehenden Ansprüche, **dadurch gekennzeichnet, dass** der Kunststoff mit Kohlefasern versehen ist, der die Leitfähigkeit des Kunststoffes sicherstellt.

5. Kraftstoffpumpe nach einem der vorhergehenden Ansprüche, **dadurch gekennzeichnet, dass** der Kunststoff mit Metallfasern versehen ist, der die Leitfähigkeit des Kunststoffes sicherstellt.

6. Kraftstofffördereinheit mit einer Kraftstoffpumpe (2) nach einem der Ansprüche 1 bis 5.

## Claims

1. Fuel pump comprising
an electric motor (4),
a pump stage (6), which is able to be driven by the electric motor (4), and a fuel-pump housing (8, 9, 10), which accommodates the electric motor (4) and the pump stage (6), wherein the fuel-pump housing (8, 9, 10) has a first housing part (10) for accommodating the electric motor (4) and has a second housing part (8, 9) for accommodating the pump stage (6), **characterized in that** the first housing part (10) is formed from a conductive plastic for dissipating static charges to an earth potential.

2. Fuel pump according to Claim 1, **characterized in that** the second housing part (8, 9) is formed from a conductive plastic for dissipating static charges to an earth potential.

3. Fuel pump according to Claim 1 or 2, **characterized in that** the plastic is provided with graphite powder, which ensures the conductivity of the plastic.

4. Fuel pump according to one of the preceding claims, **characterized in that** the plastic is provided with carbon fibres, which ensure the conductivity of the plastic.

5. Fuel pump according to one of the preceding claims, **characterized in that** the plastic is provided with metal fibres, which ensure the conductivity of the plastic.

6. Fuel-delivery unit having a fuel pump (2) according to one of Claims 1 to 5.

## Revendications

1. Pompe à carburant, comprenant
un moteur électrique (4),
un étage de pompe (6) pouvant être entraîné par le moteur électrique (4) et un boîtier de pompe à carburant (8, 9, 10) recevant le moteur électrique (4) et l'étage de pompe (6), le boîtier de pompe à carburant (8, 9, 10) présentant une première partie de boîtier (10) pour recevoir le moteur électrique (4) et une deuxième partie de boîtier (8, 9) pour recevoir l'étage de pompe (6), **caractérisée en ce que**
la première partie de boîtier (10) est réalisée en une matière plastique conductrice pour évacuer les charges statiques vers un potentiel de masse.

2. Pompe à carburant selon la revendication 1, **caractérisée en ce que** la deuxième partie de boîtier (8, 9) est réalisée en une matière plastique conductrice pour évacuer les charges statiques vers un potentiel de masse.

3. Pompe à carburant selon la revendication 1 ou 2, **caractérisée en ce que** la matière plastique est pourvue de poudre de graphite qui assure la conductivité de la matière plastique.

4. Pompe à carburant selon l'une quelconque des revendications précédentes, **caractérisée en ce que** la matière plastique est pourvue de fibres de carbone qui assurent la conductivité de la matière plastique.

5. Pompe à carburant selon l'une quelconque des revendications précédentes, **caractérisée en ce que** la matière plastique est pourvue de fibres métalliques qui assurent la conductivité de la matière plastique.

6. Unité de transport de carburant avec une pompe à carburant (2) selon l'une quelconque des revendications 1 à 5.
